# FASCICULE DE BREVET EUROPEEN

(11) **EP 3 374 741 B1**
(45) Date de publication et mention de la délivrance du brevet: **12.02.2020**
(21) Numéro de dépôt: 16806257.8
(22) Date de dépôt: 08.11.2016
(51) Int. Cl.: G01F 1/28

(54) **EQUIPEMENT POUR L'ESTIMATION DU VOLUME DE FLUIDE CIRCULANT DANS UN CONDUIT**
VORRICHTUNG ZUR SCHÄTZUNG DES VOLUMENS EINES IN EINER ROHRLEITUNG STRÖMENDEN FLUIDS
APPARATUS FOR ESTIMATING THE VOLUME OF FLUID FLOWING IN A PIPE

(30) Priorité: 10.11.2015 FR 1560759; 24.06.2016 FR 1655930
(43) Date de publication de la demande: 19.09.2018
(73) Titulaire: Oxeau Invest, 33000 Bordeaux (FR)
(72) Inventeur: LE FLOC'H, Jacques, 16120 St Romain (FR)
(74) Mandataire: IP Trust
(86) Numéro de dépôt international: PCT/FR2016/052882
(87) Numéro de publication internationale: WO 2017/081394

(56) Documents cités:
- EP-A1- 0 679 872
- US-A- 2 453 376
- US-A- 3 885 434
- US-A- 4 616 509
- US-A- 4 996 883
- US-A- 5 248 246

## Description

### Domaine de l'invention

La présente invention concerne la mesure du volume d'eau circulant de l'eau dans un conduit, et notamment dans un conduit d'alimentation en eau potable. On utilise à cet effet un débitmètre qui est inséré sur le circuit de circulation d'eau.

### Etat de la technique

On connaît de très nombreuses variétés de débitmètre, mettant en ouvre des technologies telles que :
- la mesure de la vitesse du fluide par exemple un débitmètre à turbine, pistons ou rotors,
- la mesure de l'interaction du fluide avec un signal sonore, par exemple un débitmètre à ultrasons,
- la mesure de l'interaction électrique, par exemple un débitmètre ionique ou un courantomètre
- la mesure des variations de pression engendrées par des tourbillons de Karman par un débitmètre à effet vortex ;
- un débitmètre électromagnétique mesure la réponse d'un fluide conducteur à un champ magnétique
- la mesure de la perte de charge (perte de pression) ou pression différentielle entre un repère amont et un repère aval, à l'aide d'un organe déprimogène tel qu'une plaque à orifice, une tuyère (comme dans le cas d'un débitmètre à tube de Venturi) ou un diaphragme ;

EP 0 679 872 A1, US 4 616 509 A et US 3 885 434 A montrent des exemples d'autres débitmètres alternatifs comprenant des moyens générant des vibrations pour mesurer le débit .

### Solution apportée par l'invention

Afin de remédier à ces inconvénients, l'invention concerne selon son acception la plus générale un équipement pour l'estimation du volume de fluide circulant dans un conduit selon la revendication 1. De préférence, il comprend au moins un battant suspendu par un axe solidaire de la paroi du conduit, et mobile entre une position instable où une partie du battant vient en contact avec la paroi, et une position où ladite partie est écartée de la paroi, ainsi qu'un capteur pour détecter l'impact dudit battant sur ladite paroi.

Cette solution mécanique permet de compter une volumétrie précise d'écoulement d'un fluide dans une canalisation.

Il s'agit de produire un impact qui constitue un signal clair et net. Une fois le signal produit, il est détectable quel que soit le capteur électronique qui le mesure ensuite. Cette solution permet de mesurer avec précision des quantités de volumes pour un flux. Pour une section donnée du mécanisme, ainsi que pour ses autres caractéristiques, ailette ou battant, on établit la correspondance par abaque du volume proportionnel au nombre d'impacts constatés, captés et mesurés par comptage du nombre d'impacts dans un temps donné pour une section de canalisation donnée pour un volume déplacé donné.

De préférence, ledit battant est supporté par un axe horizontal et présente une masse en aval dudit axe supérieur à la masse en amont dudit axe.

Selon une variante, ledit battant présente une extrémité aval fourchue.

Selon une autre variante, ledit battant présente une forme vrillée.

Selon une troisième variante, l'équipement comporte en outre une hélice rotative placée dans le flux du fluide, présentant au moins une pale interagissant avec ledit battant mobile entre une position où il est repoussé par ladite zone de la pale et une position où il vient en contact avec la paroi du conduit.

L'invention concerne aussi un système pour l'estimation du volume de fluide circulant dans un conduit caractérisé en ce qu'il est constitué par un équipement comprenant au moins un battant suspendu par un axe solidaire de la paroi du conduit, et mobile entre une position instable où une partie du battant vient en contact avec la paroi, et une position où ladite partie est écartée de la paroi ainsi qu'un capteur sonore fixé sur la paroi extérieure dudit conduit, délivrant un signal électrique à un circuit électronique.

Avantageusement, ledit circuit électronique comprend des moyens pour analyser d'une part les signaux sonores produit par les chocs du battant sur la paroi du conduit et d'autre part la signature sonore produite par le changement d'état d'un équipement de consommation de fluide de l'installation.

Selon une variante, le système est configuré pour permettre une mise en place sur une installation existante par dévissage d'un raccord sur la conduite et d'insertion dudit système.

Avantageusement, le système est configuré pour permettre une adaptation à la section d'une canalisation.

L'invention concerne également, de façon générale, un équipement pour l'estimation du volume de fluide circulant dans un conduit, un équipement pour l'estimation du volume de fluide circulant dans un conduit, caractérisé en ce qu'il comprend des moyens pour générer des vibrations au niveau du conduit et des moyens pour actionner les moyens générant les vibrations, lesdits moyens d'actionnement étant montés mobiles sur un axe traversant diamétralement le conduit, entre une position dans laquelle les moyens d'actionnement viennent en contact avec une paroi, actionnant ainsi les moyens générant les vibrations, et une position dans laquelle les moyens d'actionnement sont écartés de ladite la paroi.

Celui-ci peut reprendre les caractéristiques précédemment décrites, indépendamment les unes des autres ou en combinaison. Plus particulièrement, il peut être prévu que :
- les moyens générant les vibrations comprennent au moins un battant suspendu par un axe solidaire de la paroi du conduit, et mobile entre une position instable où une partie du battant vient en contact avec la paroi, et une position où ladite partie est écartée de la paroi.
- ledit battant est supporté par un axe horizontal, et présente une masse en aval dudit axe supérieure à la masse en amont dudit axe.
- ledit battant présente une extrémité aval fourchue et/ou une forme vrillée.
- il comporte une hélice rotative placée dans le flux du fluide, présentant au moins une pale interagissant avec ledit battant mobile entre une position où il est repoussé par ladite zone de la pale et une position où il vient en contact avec la paroi du conduit, ladite hélice constituant les moyens d'actionnement dudit battant.
- il présente un corps comprenant une première partie définissant une conduite d'entrée et une deuxième partie définissant une cavité ouverte en extrémité de sortie du corps tubulaire, une hélice étant montée libre en rotation sur un axe traversant diamétralement la cavité, l'hélice présentant au moins une pale interagissant avec un arrangement de billes logées dans un canal ménagé dans la paroi de la conduite d'entrée, l'arrangement de billes et ladite hélice constituant respectivement les moyens générant les vibrations et les moyens d'actionnement.
- les moyens pour générer des vibrations et les moyens d'actionnement forment une seule et même pièce.

### Description détaillée d'exemples non limitatifs de l'invention

La présente invention sera mieux comprise à la lecture de la description qui suit, se référant à des exemples non limitatifs de réalisation illustrés par les dessins annexés où :
- les figures 1 et 2 représentent des vues respectivement en coupe longitudinale et en écorché d'un équipement selon l'invention
- la figure 3 représente une vue en découpe longitudinale d'un conduit avec une première variante de réalisation
- la figure 4 représente une vue en trois-quart face d'un conduit avec une deuxième variante de réalisation
- la figure 5 représente une vue en coupe longitudinale d'un conduit avec une troisième variante de réalisation
- la figure 6 représente une vue en coupe longitudinale d'un équipement selon un autre mode de réalisation
- la figure 7 représente une vue schématique l'équipement de la figure 1, l'équipement étant représenté sans les moyens générant les vibrations et les moyens d'actionnement associés
- la figure 8 représente une vue en perspective suivant l'axe AA de l'équipement de la figure 7.

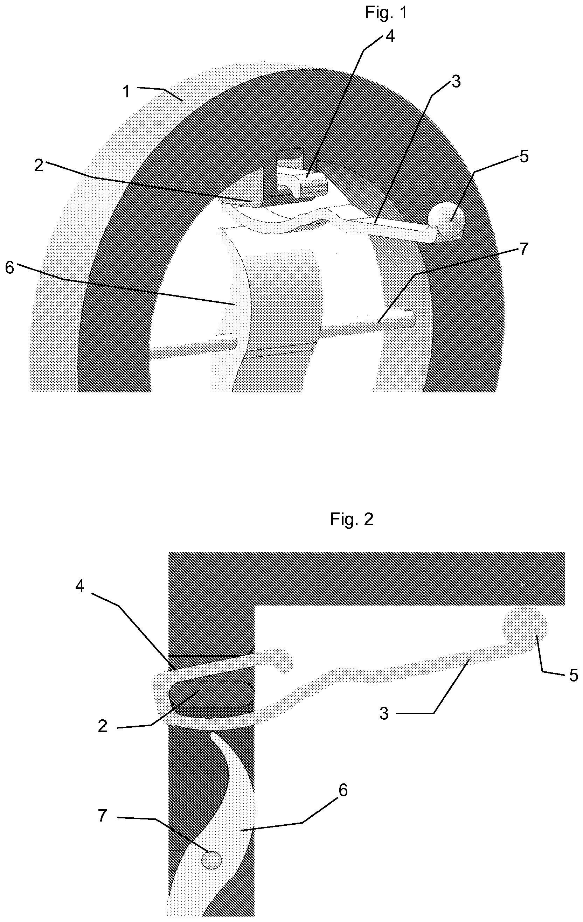

L'invention concerne une solution mécanique qui permet le comptage (donc un volume) à partir d'un capteur électro-acoustique complémentaire. De façon générale, l'invention illustrée sur les figures 1 à 5 met en œuvre un élément asymétrique constitué par un battant sonore ou vibratoire frappant la paroi pour une interception électronique de la circulation d'un fluide (eau, etc..) dans un conduit.

La fréquence des chocs du battant sur la paroi intérieure du conduit permet d'estimer les quantités de fluide passant dans le conduit par la captation électronique du signal produit précisément par le battement : de fait cette solution devient un compteur.

L'équipement se loge dans le tuyau au niveau d'un raccord, qui ne nécessite pas de joint, qui ne fait pas plus de 3mm d'épaisseur, et qui ne gêne donc en rien l'installation existante.

Avec le signal du battant, il est possible de connaître dans la durée le nombre de coups, la variation de ces coups et l'intensité du coup grâce au système de mesure utilisé, par exemple un capteur piézo-électrique ou acoustique.

Les figures 1 et 2 représentent un premier exemple de mise en œuvre.

L'équipement est constitué par un élément tubulaire (1) présentant une section identique à celle du conduit de circulation du fluide dans lequel il est inséré. Cet élément tubulaire (1) présente un étrier (2) pour la suspension d'un battant (3), présentant dans l'exemple décrit une partie recourbée (4) venant en appui sur l'étrier (2) et une extrémité libre (5) venant au contact de la paroi du conduit lorsque le battant (3) est heurté par une pale (6) montée sur un axe (7) traversant diamétralement et horizontalement l'élément tubulaire (1). Dans ce mode de réalisation, le battant (3) constitue les moyens pour générer les vibrations, l'hélice (6) constituant les moyens d'actionnement dudit battant (3).

Le fonctionnement est le suivant : la circulation de fluide dans le conduit entraîne la rotation de la pale (6) dont les extrémités viennent repousser le battant (3). Son extrémité libre (5) vient cogner la paroi intérieure du conduit, ce qui provoque des vibrations détectées par un capteur piézo-électrique ou acoustique fixé sur le conduit. L'analyse des signaux détectés permet de calculer le volume de fluide circulant dans le conduit.

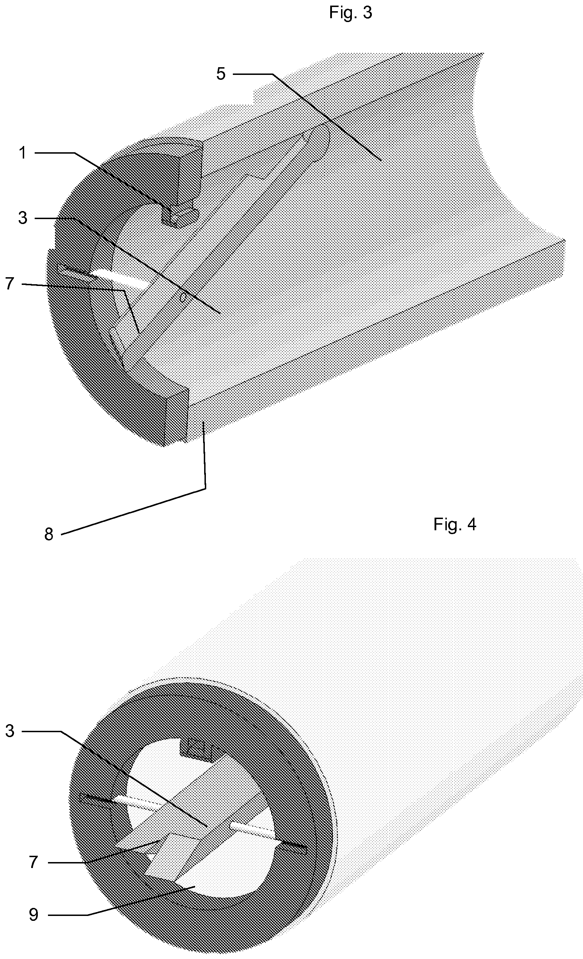

La figure 3 représente une variante de réalisation où le battant (3) présente une forme vrillée, de sorte qu'un bord d'attaque (8) interagisse avec le fluide circulant dans le conduit pour déplacer le battant (3) entre une position de repos et une position dans laquelle l'extrémité (5) heurte la paroi du conduit.

La figure 4 représente une variante de réalisation où l'extrémité amont (9) opposée à l'extrémité libre (5) venant en contact avec la paroi du conduit est fourchue, pour interagir avec le fluide circulant.

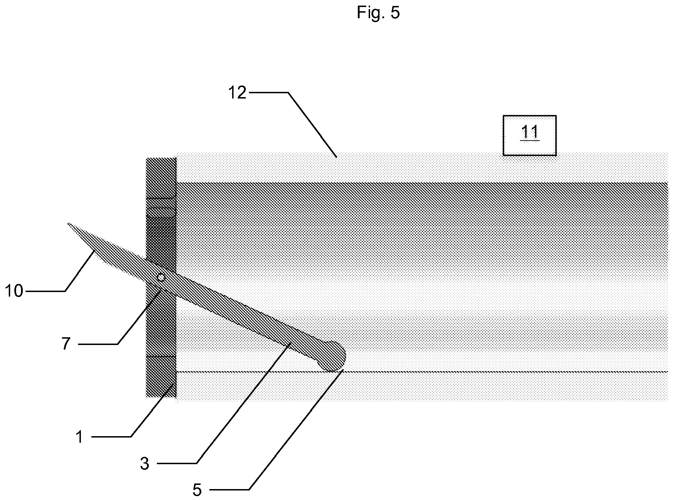

La figure 5 représente une autre variante où l'extrémité amont (10) présente une forme en biseau.

Dans les modes de réalisation illustrés sur les figures 3 à 5, les moyens pour générer les vibrations sont formés par l'extrémité (5) du battant (3). Les moyens pour générer les vibrations et les moyens d'actionnement (corps de du battant (3)) forment ainsi une seule et même pièce.

Un capteur piézoélectrique ou acoustique (11) fixé sur le conduit (12) réceptionne puis fournit un signal électrique fonction du nombre d'impulsions et/ou des vibrations transmises par la paroi du conduit.

Ces vibrations résultent de deux phénomènes de natures distinctes :
- les chocs de l'extrémité (5) du battant (3) sur la paroi du conduit,
- les micro-perturbations produites par le changement d'état d'un poste de consommation de fluide en amont ou en aval du capteur (11), par exemple l'ouverture ou la fermeture d'un robinet, d'une chasse d'eau ou d'une vanne.

Ces signaux font l'objet d'une analyse de données, par exemple des données spectrales, pour séparer deux spectres correspondant l'un à des fréquences basses et une amplitude élevée et l'autre à des fréquences plus élevées et une amplitude faible.

La calibration initiale prend en compte les variables nécessaires à la mesure volumétrique : diamètre du tuyau, dimension de l'objet, nombre de pales si hélice, taille et poids si batteur, etc... La courbe de calibration est déterminée par exemple par une mesure réalisée par un appareil de mesure des volumes permettant de « calibrer » et référencer le résultat de chaque mécanisme en correspondance avec la section de la canalisation à laquelle il correspond pour effectuer ses mesures volumétriques. Cette mesure s'effectue en laboratoire afin de normaliser les pièces du mécanisme dans leurs dimensions, matériaux, etc.

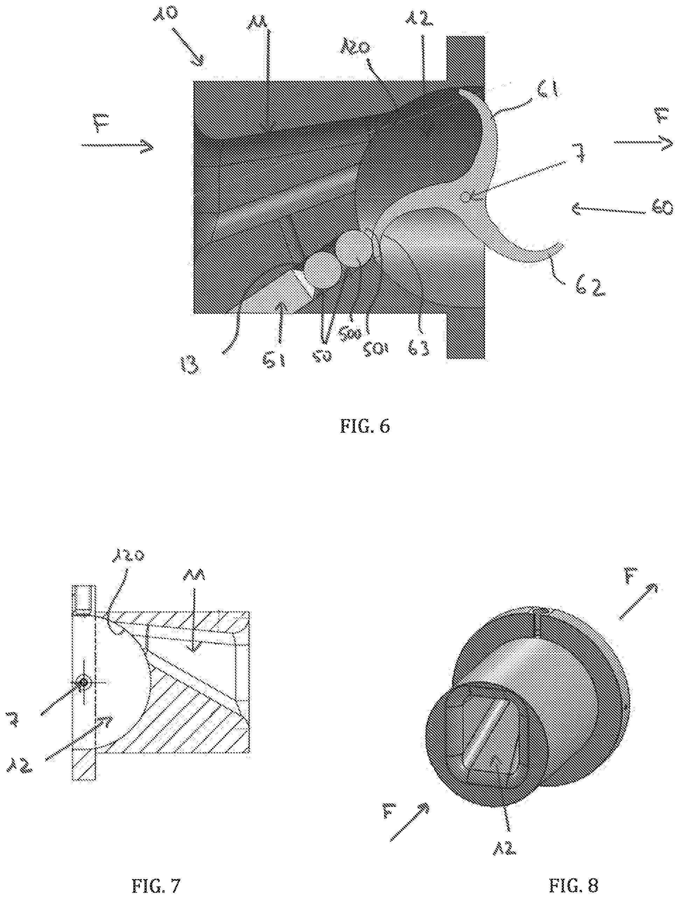

Les figures 6 à 8 représentent un autre mode de réalisation de l'équipement selon l'invention reposant sur le même principe de fonctionnement que les équipements illustrés sur les figures 1 à 5.

Dans ce mode de réalisation l'équipement présente un corps tubulaire (10) présentant des ouvertures d'extrémité. Le corps tubulaire (10) comprend une première partie définissant une conduite d'entrée (11) et une deuxième partie définissant une cavité (12) ouverte en extrémité de sortie du corps tubulaire. Comme illustré sur les figures 6 et 7, la conduite d'entrée est arrangée pour définir une tuyère convergente (par la suite référencée (11)), cette dernière communiquant directement en sortie avec la cavité (12). Les termes « entrée » et « sortie » sont déterminés suivant le sens d'écoulement du fluide lequel est représenté par la flèche référencée F.

Une hélice (60) est montée libre en rotation sur un axe (7) traversant diamétralement la cavité, au niveau de l'extrémité de sortie du corps tubulaire. Dans le mode de réalisation illustré, l'hélice (60) est représentée avec trois pales (61, 62, 63). Comme dans le mode de réalisation illustré sur la figure 1, l'hélice (60), et plus spécifiquement les pales (61, 62, 63), constituent des moyens pour actionner des moyens générant les vibrations, en l'espèce des billes (50) logées dans un canal (13) ménagé dans la paroi de la tuyère (11) (figure 6). Il est bien entendu évident qu'il peut être prévu une hélice comportant un nombre différent de pales, y compris une seule pale, sans sortir du cadre de l'invention.

Comme indiqué précédemment, la tuyère (11) présente une paroi pourvue d'un canal (13) logeant des moyens générant des vibrations. Ledit canal (13), rectiligne, est arrangé pour déboucher dans la cavité (12) du corps tubulaire (10), et pour avoisiner la paroi du conduit de circulation du fluide lorsque l'équipement est en place sur ledit conduit de circulation dans lequel il est inséré. Des billes (50), dans l'exemple illustré deux, de préférence de section et de nature (i.e. matériau) identiques, sont disposées dans le canal (13), bloquées dans celui-ci au moyen d'une pièce formant butée (53). Ladite pièce est de préférence réalisée dans le même matériau que celui des billes. La pièce formant butée (13) et les billes (50) sont agencées de manière à ce que la bille d'extrémité (500) présente une portion (501) de bille dépassant légèrement la paroi (120) de la cavité. Un canal complémentaire (53) s'étendant entre la tuyère (11) et le canal (13) logeant les billes est en outre prévu afin d'établir une pression d'opposition sur les billes pour les contraindre à revenir vers les pales.

La pièce formant butée (51) et les billes constituent, dans ce mode de réalisation, les moyens pour générer les vibrations en réponse au choc transmis par les pales de l'hélice lors de leur passage et de leur contact avec la portion (501) de la bille (500) dépassant dans la cavité (12). Comme on le comprend, les vibrations sont transmises par la bille d'extrémité (500) à la paroi du conduit de circulation de fluide, via la pièce formant butée (51) et la deuxième bille en réponse au choc donné par l'une des pales de l'hélice (60) à la bille d'extrémité (500), suivant le principe du balancier de Newton.

De même que précédemment, les signaux relatifs aux vibrations sont relevés par un capteur piézoélectrique ou acoustique fixé sur le conduit de circulation du fluide pour qui les transforme en des signaux électriques fonction du nombre d'impulsions et/ou des vibrations transmises par la paroi du conduit. Ces signaux font ensuite l'objet d'une analyse de données, par exemple des données spectrales, pour séparer deux spectres correspondant l'un à des fréquences basses et une amplitude élevée et l'autre à des fréquences plus élevées et une amplitude faible.

L'avantage de l'équipement selon l'invention est le caractère non intrusif de sa mise en place dans un conduit. En effet, l'équipement vient se glisser dans un conduit au niveau d'un raccord après simple dévissage de ce dernier. Aucune action physique sur les tuyaux (raccord, coupes, adaptation diamètre, etc.) n'est donc nécessaire.

## Revendications

1. Equipement pour l'estimation du volume de fluide circulant dans un conduit, comprenant des moyens pour générer des vibrations au niveau du conduit, **caractérisé en ce que** l'équipement comprend des moyens pour actionner les moyens générant les vibrations, lesdits moyens d'actionnement étant montés mobiles sur un axe traversant diamétralement le conduit, entre une position dans laquelle les moyens d'actionnement viennent en contact avec une paroi, ladite paroi étant formée par la paroi intérieure du conduit ou par les moyens générant les vibrations, actionnant ainsi les moyens générant les vibrations, et une position dans laquelle les moyens d'actionnement sont écartés de ladite paroi.

2. Equipement pour l'estimation du volume de fluide circulant dans un conduit selon la revendication 1, **caractérisé en ce que** les moyens générant les vibrations comprennent au moins un battant (3) suspendu par un axe solidaire de la paroi du conduit, et mobile entre une position instable où une partie du battant (3) vient en contact avec la paroi intérieure du conduit, et une position où ladite partie est écartée de la paroi intérieure du conduit.

3. Equipement pour l'estimation du volume de fluide circulant dans un conduit selon la revendication 2, **caractérisé en ce que** ledit battant (3) est supporté par un axe horizontal (7), et présente une masse en aval dudit axe supérieure à la masse en amont dudit axe.

4. Equipement pour l'estimation du volume de fluide circulant dans un conduit selon la revendication 2 ou la revendication 3, **caractérisé en ce que** ledit battant (3) présente une extrémité aval fourchue.

5. Equipement pour l'estimation du volume de fluide circulant dans un conduit selon l'une quelconque des revendications 2 à 4, **caractérisé en ce que** ledit battant (3) présente une forme vrillée.

6. Equipement pour l'estimation du volume de fluide circulant dans un conduit selon l'une quelconque des revendications 2 à 5, **caractérisé en ce qu'**il comporte en outre une hélice rotative placée dans le flux du fluide, présentant au moins une pale interagissant avec ledit battant (3) mobile entre une position où il est repoussé par ladite zone de la pale et une position où il vient en contact avec la paroi intérieure du conduit, ladite hélice constituant les moyens d'actionnement dudit battant (3).

7. Equipement pour l'estimation du volume de fluide circulant dans un conduit selon la revendication 1, **caractérisé en ce qu'**il présente un corps comprenant une première partie définissant une conduite d'entrée (11) et une deuxième partie définissant une cavité (12) ouverte en extrémité de sortie du corps tubulaire, une hélice (60) étant montée libre en rotation sur un axe (7) traversant diamétralement la cavité, l'hélice (60) présentant au moins une pale interagissant avec un arrangement de billes logées dans un canal (13) ménagé dans la paroi de la conduite d'entrée (11), l'arrangement de billes et ladite hélice constituant respectivement les moyens générant les vibrations et les moyens d'actionnement.

8. Equipement pour l'estimation du volume de fluide circulant dans un conduit selon l'une quelconque des revendications 1 à 5, **caractérisé en ce que** les moyens pour générer des vibrations et les moyens d'actionnement forment une seule et même pièce.

9. Equipement pour l'estimation du volume de fluide circulant dans un conduit selon l'une quelconques des revendications 1 à 8, **caractérisé en ce qu'**il est configuré pour permettre une mise en place sur une installation existante par dévissage d'un raccord sur la conduite et d'insertion dudit système.

10. Equipement pour l'estimation du volume de fluide circulant dans un conduit selon l'une quelconque des revendications 1 à 9, **caractérisé en ce qu'**il est configuré pour permettre une adaptation à la section d'une canalisation.

## Patentansprüche

1. Vorrichtung zum Schätzen des in einer Leitung strömenden Fluidvolumens, das Mittel zum Erzeugen von Schwingungen an der Leitung umfasst, **dadurch gekennzeichnet, dass** die Vorrichtung Mittel zum Betätigen der schwingungserzeugenden Mittel umfasst, wobei die Betätigungsmittel auf einer, die Leitung diametral kreuzenden Achse zwischen einer Position, in der die Betätigungsmittel mit einer Wand in Kontakt kommen, wobei die Wand durch die Innenwand der Leitung oder durch die schwingungserzeugenden Mittel gebildet wird, und einer Position, in der die Betätigungsmittel von der Wand beabstandet sind, beweglich montiert sind, wodurch die Mittel zur Schwingungserzeugung betätigt werden.

2. Vorrichtung zum Schätzen des in einer Leitung strömenden Fluidvolumens nach Anspruch 1, **dadurch gekennzeichnet, dass** die Mittel zur Erzeugung der Schwingungen mindestens einen Arm (3) umfassen, der an einer mit der Wand der Leitung fest verbundenen Achse aufgehängt und zwischen einer instabilen Position, in der ein Teil des Arms (3) mit der Innenwand der Leitung in Kontakt kommt, und einer Position, in der dieser Teil von der Innenwand der Leitung beabstandet ist, beweglich ist.

3. Vorrichtung zum Schätzen des in einer Leitung strömenden Fluidvolumens nach Anspruch 2, **dadurch gekennzeichnet, dass** der Arm (3) von einer horizontalen Achse (7) gestützt wird und vor der Achse eine Masse aufweist, die größer ist als die Masse hinter der Achse.

4. Vorrichtung zum Schätzen des in einer Leitung strömenden Fluidvolumens nach Anspruch 2 oder Anspruch 3, **dadurch gekennzeichnet, dass** der Arm (3) ein gabelförmiges hinteres Ende aufweist.

5. Vorrichtung zum Schätzen des in einer Leitung strömenden Fluidvolumens nach einem der Ansprüche 2 bis 4, **dadurch gekennzeichnet, dass** der Arm (3) eine gewundene Form aufweist.

6. Vorrichtung zum Schätzen des in einer Leitung strömenden Fluidvolumens nach einem der Ansprüche 2 bis 5, **dadurch gekennzeichnet, dass** sie des Weiteren ein rotierendes Flügelrad umfasst, das in den Fluidstrom platziert ist und mindestens einen Flügel aufweist, der mit dem Arm (3), der sich zwischen einer Position, in der er durch die Zone des Flügels zurückgedrückt wird, und einer Position, in der er mit der Innenwand der Leitung in Kontakt kommt, bewegen kann, zusammenwirkt, wobei das Flügelrad die Mittel zur Betätigung des Arms (3) bildet.

7. Vorrichtung zum Schätzen des in einer Leitung strömenden Fluidvolumens nach Anspruch 1, **dadurch gekennzeichnet, dass** sie einen Körper aufweist mit einem ersten Teil, der eine Einlassleitung (11) abgrenzt, und einem zweiten Teil, der einen am Austrittsende des rohrförmigen Körpers offenen Hohlraum (12) abgrenzt, ein Flügelrad (60), das frei drehend auf einer, den Hohlraum diametral durchquerenden Achse (7) montiert ist, wobei das Flügelrad (60) mindestens einen Flügel aufweist, der mit einer Anordnung von Kugeln zusammenwirkt, die in einem, in der Wand der Einlassleitung (11) vorgesehen Kanal (13) gelagert sind, wobei die Anordnung von Kugeln und das Flügelrad jeweils die Mittel zur Erzeugung der Schwingungen und die Betätigungsmittel bilden.

8. Vorrichtung zum Schätzen des in einer Leitung strömenden Fluidvolumens nach einem der Ansprüche 1 bis 5, **dadurch gekennzeichnet, dass** die Mittel zum Erzeugen von Schwingungen und die Betätigungsmittel ein einziges Stück bilden.

9. Vorrichtung zum Schätzen des in einer Leitung strömenden Fluidvolumens nach einem der Ansprüche 1 bis 8, **dadurch gekennzeichnet, dass** sie so gestaltet ist, dass die Installation an einer bestehenden Anlage durch Lösen einer Verbindung an der Leitung und Einsetzen des Systems möglich ist.

10. Vorrichtung zum Schätzen des in einer Leitung strömenden Fluidvolumens nach einem der Ansprüche 1 bis 9, **dadurch gekennzeichnet, dass** sie so gestaltet ist, dass eine Anpassung an den Querschnitt einer Rohrleitung möglich ist.

## Claims

1. An apparatus for estimating the volume of fluid flowing in a pipe, comprising means for generating vibrations at the pipe, **characterized in that** the apparatus comprises means for actuating the means generating the vibrations, said actuating means being mounted movably on a pin crossing the pipe diametrically, between a position in which the actuating means engages with a wall, said wall being formed by the inner wall of the pipe or by the means generating the vibrations, thereby actuating the means generating the vibrations, and a position in which the actuating means are separated from said wall.

2. An apparatus for estimating the volume of fluid flowing in a pipe according to claim 1, **characterized in that** the means generating the vibrations comprise at least one bracket (3) suspended by a pin rigidly connected to the wall of the pipe, and movable between an unstable position in which a portion of the bracket (3) engages with the inner wall of the pipe, and a position in which said portion is separated from the inner wall of the pipe.

3. An apparatus for estimating the volume of fluid flowing in a pipe according to claim 2, **characterized in that** said bracket (3) is supported by a horizontal pin (7), and has a mass downstream of said pin greater than the mass upstream of said pin.

4. An apparatus for estimating the volume of fluid flowing in a pipe according to claim 2 or claim 3, **characterized in that** said bracket (3) has a forked downstream end.

5. An apparatus for estimating the volume of fluid flowing in a pipe according to any one of claims 2 to 4, **characterized in that** said bracket (3) has a twisted shape.

6. An apparatus for estimating the volume of fluid flowing in a pipe according to any one of claims 2 to 5, **characterized in that** it further comprises a rotating helix placed in the fluid flow, having at least one blade interacting with said movable bracket (3) between a position in which it is pushed back by said zone of the blade and a position in which it engages with the inner wall of the pipe, said helix constituting the means for actuating said bracket (3).

7. An apparatus for estimating the volume of fluid flowing in a pipe according to claim 1, **characterized in that** it has a body comprising a first portion defining an inlet pipe (11) and a second portion defining a cavity (12) open at the outlet end of the tubular body, an helix (60) being mounted freely in rotation on a pin (7) crossing the cavity diametrically, the helix (60) having at least one blade interacting with an arrangement of balls housed in a channel (13) provided in the wall of the inlet pipe (11), the arrangement of balls and said helix respectively constituting the means generating the vibrations and the actuating means.

8. An apparatus for estimating the volume of fluid flowing in a pipe according to any one of claims 1 to 5, **characterized in that** the means for generating vibrations and the actuating means form a single part.

9. An apparatus for estimating the volume of fluid flowing in a pipe according to any one of claims 1 to 8, **characterized in that** it is configured to allow positioning on an existing installation by unscrewing a connection on the pipe and inserting said system.

10. An apparatus for estimating the volume of fluid flowing in a pipe according to any one of claims 1 to 9, **characterized in that** it is configured to allow adaptation to the cross-section of a conduit.
